# EUROPEAN PATENT SPECIFICATION

(11) **EP 0 468 993 B1**
(45) Date of publication and mention of the grant of the patent: **01.12.1993**
(21) Application number: 90905538.6
(22) Date of filing: 04.04.1990
(51) Int. Cl.: E04B 1/41, E04B 2/06, F24B 1/06

(54) **CORNER JOINT FOR BUILDING UNITS OF STONE**
AUSBILDUNG EINER ECKFUGE FÜR BAUEINHEITEN AUS STEIN
ASSEMBLAGE D'ANGLE SERVANT A CONSTRUIRE DES UNITES EN PIERRE

(30) Priority: 20.04.1989 FI 891893
(43) Date of publication of application: 05.02.1992
(73) Proprietor: Suomen Vuolukivi Oy, SF-83940 Nunnanlahti (FI)
(72) Inventor: VAUHKONEN, Reijo, Nunnanlahti (FI)
(74) Representative: Leale, Robin George
(86) International application number: PCT/FI90/00090
(87) International publication number: WO 90/12932

(56) References cited:
- DE-A- 3 125 833
- DE-A- 3 147 527
- DE-A- 3 225 655
- DE-C- 858 767
- DE-C- 3 213 953
- FR-A- 1 042 544
- FR-A- 2 326 548

## Description

The present invention relates to a corner joint for building units of stone, particularly of soap-stone, for furnaces or the like to join two units cornerwise to each other by using a binding hook extending from one stone unit to another, which hook is arranged to sink into a groove cut in an edge of the stone units for this purpose, while joint pins of the hook sink into borings provided for them, the joint comprising a corner piece separate from the units and having two joints surfaces forming an angle with respect to each other, against which surfaces, joint surfaces of the units are arranged.

Corner joints of the kind described above are generally used in the assembly of constructions using building units of stone, as e.g. for fire-places and furnaces. Such a joint is known, for instance, from German Offenlegungsschrift 3 125 833. In a corner joint of this kind, the stone units are joined to the corner piece by using at least one binding hook for each joint surface between the corner piece and the stone units. Thus the end face of the corner piece must be furnished with at least two borings for the joint pins of the hooks and grooves extending from the edge of the corner piece to the borings, the grooves being at an angle with respect to each other. Accordingly, several work stages are needed to finish the corner piece and during installation at least two binding hooks have to be used and installed.

At least to an extent, the above-mentioned problems can be avoided by using a binding hook as described in French Patent No. 1,042,544, which discloses the preamble of claim 1, in which a right angled web piece has pegs mounted to locate the corner section and the two side walls together, and which sinks into a right angled groove created by an L-shaped corner piece and a square section insert. However this solution creates its own problems of complicated machining and assembly as well as to limitations to corners of 90°.

The present invention removes these difficulties and is characterised in that the end groove of the corner piece has the form of an arc and at least the web portion of the hook is a single piece die cut from a metal sheet.

The corner pieces can be most easily produced by making the groove in the form of a circle on the end face of a larger stone block which is then subsequently divided into a number of segments, for example, four corner pieces. The building units can then be held in place adjacent to a corner piece by means of a binding hook that sinks into the groove which runs from one building unit, across the end face of the corner section (in the form of an arc), to the other building unit, the binding hook being held in position by its joint pins located in borings in the units. Manufacture of the binding hook by die-cutting it from a metal sheet is very simple and efficient.

Other advantages of the corner joint of the invention as mentioned are that the ends of the grooves do not remain visible since they do not extend up to the end of the stone units, so there is no need to grind these ends and it is only usually necessary that the edges of their front face need be bevelled, which can be carried out together with the grinding of the front face. Additionally, the corner produced can be shaped very differently by pre-shaping the corner piece. Thus, the surface of the corner piece remaining visible can be rectangular, round, concave or often bevelled in different ways. Also an advantage in the use of the corner pieces is that the amount of different stone units required remains less, because it is no longer necessary to manufacture units being mirror images of each other. Generally speaking, the corner joint of the invention makes it possible to easily give the furnace an improved and more individual appearance and the furnace can be planned more freely in other respects as well.

Another advantage with the present invention is that the corner pieces themselves do not need to have adjacent joint surfaces tending to a right angle as other angles can be just as easily made by using the described procedure to make the groove in the end face of the corner section. By changing this angle, new possibilities for manufacturing different kinds and shapes of furnaces become available.

If each stone unit is provided with a groove cut in its edge and extending, at least on the corner joint side, to the joint surface of the unit, it is preferable that the breadth of the web portion of the binding hook as well as the breadth of the end groove of the corner piece correspond to the breadth of the groove. Thus, it is not necessary to make any part of the groove broader specifically for the binding hook, and the use of the binding hook only requires borings for the joint pins.

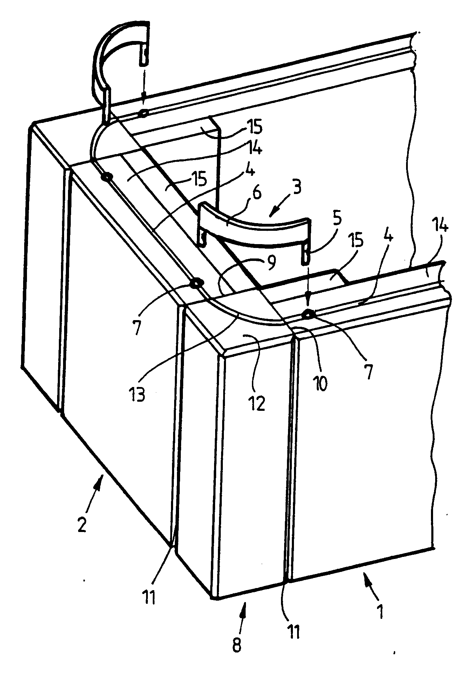

A corner joint according to an embodiment of the invention will be described below in greater detail referring to the drawing enclosed, the figure of which shows an exemplary embodiment of the corner joint of the invention.

The figure shows a corner joint between two building units 1 and 2 of stone in accordance with an embodiment of the invention. Stone units 1 and 2 comprise grooves 4 in their upper edge 14. These grooves 4 are provided with borings 7 for joint pins 5 of a binding hook 3. Joint surfaces on the corner joint for both stone units 1 and 2 are indicated by the reference numeral 11. As mentioned above, these joint surfaces do not need to be ground. The corner is formed by means of a corner piece 8, which according to the embodiment of the invention illustrated in the figure, has the form of a rectangular prism with two joint surfaces 9 and 10 perpendicular with respect to each other, against which joint surfaces joint surfaces 11 of the units are arranged. Obviously the corner pieces themselves do not need to have a square cross-section as shown for the embodiment in the figure, for example the cross-section may be triangular or the corner could be bevelled, rounded or gouged in different ways. Thus, the joint surfaces 9 and 10 do not need to be perpendicular to each other, and also by changing the angle between these joint surfaces, the angle at which the stone units 1 and 2 join together can be changed. This gives new possibilities for manufacturing different kinds and shapes of furnaces compared with the previously known corner joints, which could only easily form a rectangular joint.

In order to bind the stone units 1 and 2 and the corner piece 8 together, upper surface 12 of the corner piece 8 is provided with a groove 13 for a web portion 6 of the binding hook 3. In the embodiment shown, this groove 13 is as broad as the groove 4 of the stone units. In the same way, the breadth of the binding hook 3 corresponds to the breadth of the groove 4 on the one hand and to the breadth of the groove 13 formed in the upper surface of the corner piece 8 on the other hand. In this way, it is not necessary to broaden the ends of the grooves of the stone units. Of course, it would also be possible to use hooks of a different breadth, but this would naturally presuppose additional working of the ends of the grooves. By making the web portion 6 of the binding hook 3 flat and its depth corresponding to the depth of the groove 13, the binding hook can be made to bind the corner piece 8 to the units 1 and 2 together with its web portion 6, while it also binds the stone units 1 and 2 together by means of its joint pins 5.

Though the figure does not show it, the lower end of the corner piece 8 can be joined to the units 1 and 2 in the same way as the upper end. It is also possible to use a less firm way of fastening to join the lower end, which way could for instance be a similar joint as is used between parallel stone units, i.e. that a suitable continuous joint strip is fastened to their grooves. In practice, this would be carried out in such a way that the lower end of the corner piece 8 would be provided with for instance two separate grooves, one of them joining to the groove in the lower surface of the unit 1 and the other to the groove in the lower surface of the unit 2, and in these grooves would also be arranged fastening strips extending to the corner piece. It is clear that these grooves formed at the lower end of the corner piece 8 must not extend up to its outer surfaces.

As mentioned above, the groove 13 shaped as part of a circular arc is most advantageous in practice, because it is produced in the simplest manner. This operation can be carried out for instance, by forming a complete annular groove in the end face of a large stone piece and this stone piece is then divided into a number of segments, for example, four 90 degree segments, to form in this case four corner pieces, each of them being provided with a groove shaped like a circular arc.

In the embodiment shown in the figure, the web portion of the binding hook 3 has been shaped flat, whilst its joint pins 5 are round. However, such a structure presupposes that the joint pins are separately formed and are joined to the web portion 6 in a separate stage of operation. A simpler alternative is to manufacture the whole joint piece by die cutting it from a metal sheet. Then the joint pins would have a rectangular cross-section, which per se constitutes no practical problem. In such a method of manufacture, it would be necessary to increase the breadth of the joint pins 5 to provide a sufficient strength, but this step causes no practical problems either.

Only one embodiment of the corner joint of the invention has been described above and it is understandable that even several changes partially outlined above already can be made without deviating from the scope of protection according to the claims enclosed. The corner joint of the invention can be applied to also other corner joints of furnaces than to those of the outer surface. An example thereof is given also in the figure, in which reinforcement plates 15 of smoke channels inside the stone units 1 and 2 are also joined at their corners in the manner of the invention, by using preferably the same corner pieces 8 as have been used at the corner joint of the outer surface. The most substantial thing with the invention is that it is now possible and simple to design the angle between the stone units to look entirely as desired. It is also easy to make it differ from the right angle, and what is most important, the extra corner piece can be joined to the stone units 1 and 2 by means of the metal binding hook joining the stone units 1 and 2 together. Thus, no extra joint parts are needed for fastening the extra corner piece.

## Claims

1. Corner joint for building units of stone, particularly of soapstone, for furnaces or the like to join two units (1,2) cornerwise to each other by using a binding hook (3) extending from one stone unit (1) to another (2), which hook is arranged to sink into a groove (4) cut in an edge (14) of the stone units for this purpose and extends at least on the corner joint side to the joint surface (11) of the unit while joint pins (5) of the hook sink into borings (7) provided for them, the joint comprising a corner piece (8) separate from the units (1,2) and having two joint surfaces (9, 10) forming an angle with respect to each other, against which joint surfaces, joint surfaces (11) of the units (1,2) are arranged, whereby at least one end face (12) of the corner piece (8) is provided with a groove (13), into which groove a web portion (6) combining the joint pins (5) of the binding hook (3) are arranged to sink in order to lock the units (1,2) and the corner piece (8) together, the breadth of the web portion (6) of the binding hook (3) as well as the breadth of the end groove (13) of the corner piece (8) corresponding to the breadth of the groove (4) of the stone units (1,2), characterised in that the end groove of the corner piece (8) has the form of an arc and at least the web portion (6) of the binding hook (3) is a single piece die cut from a metal sheet.

2. A corner joint as claimed in claim 1 characterised in that the joint pins (5) of the binding hook (3) are separately formed from the web portion (6) and joined thereto.

3. A corner joint as claimed in claim 1 characterised in that the joint pins (5) of the binding hook (3) are formed in the same operation as the web portion (6), when the whole binding hook (3) is die cut from a metal sheet.

## Patentansprüche

1. Eckverband für Bauelemente aus Stein, insbesondere aus Speckstein, für Öfen od. dgl., zum Zusammenfügen von zwei Elementen (1, 2) Ecke an Ecke unter Verwendung eines Verbindungshakens (3), der sich von einem Steinelement (1) zum anderen (2) erstreckt und der angeordnet ist, in eine an einer Kante (14) der Steinelemente zu diesem Zweck eingeschnittene Nut (4) einzudringen und der sich wenigstens an der Seite des Eckverbands zu einer Fugenfläche (11) des Elements erstreckt, während Fugenzapfen (5) des Hakens in dafür bestimmte Bohrungen (7) eindringen, wobei der Verband ein Eckstück (8) aufweist, das separat von den Elementen (1, 2) ist und zwei Fugenflächen (9, 10) aufweist, die miteinander einen Winkel bilden, gegen welche Fugenflächen Fugenflächen (11) der Elemente (1, 2) angeordnet sind, wobei wenigstens eine Stirnfläche (12) des Eckstücks (8) mit einer Nut (13) versehen ist, in die ein die Fugenzapfen (5) des Verbindungshakens (3) verbindender Stegabschnitt (6) eindringt, um die Elemente (1, 2) und das Eckstück (8) miteinander zu verriegeln, wobei die Breite des Stegabschnitts (6) des Verbindungshakens (3) sowie die Breite der Stirnnut (13) des Eckstücks (8) der Breite der Nut (4) der Steinelemente (1, 2) entsprechen, **dadurch gekennzeichnet**, daß die Stirnnut des Eckstücks (8) bogenförmig ist und wenigstens der Stegabschnitt (6) des Verbindungshakens (3) ein aus einer Metallplatte ausgestanztes Stück ist.

2. Eckverband nach Anspruch 1, **dadurch gekennzeichnet**, daß die Fugenzapfen (5) des Verbindungshakens (3) separat ausgebildet und mit dem Stegabschnitt (6) verbunden sind.

3. Eckverband nach Anspruch 1, **dadurch gekennzeichnet**, daß die Fugenzapfen (5) des Verbindungshakens (3) und der Stegabschnitt (6) in einem Arbeitsgang ausgebildet sind, wenn der gesamte Verbindungshaken (3) aus einer Metallplatte ausgestanzt ist.

## Revendications

1. Joint d'angle pour éléments de construction en pierre, notamment en stéatite, pour des fours ou similaires pour joindre deux éléments (1, 2) agencés en angle l'un par rapport à l'autre en utilisant un crochet de liaison (3) s'étendant d'un élément en pierre (1) à un autre (2). ce crochet étant agencé pour s'encastrer dans une gorge découpée dans ce but dans un bord (14) d'un élément en pierre et s'étendant au moins sur le côté du joint d'angle jusqu'à la surface de raccordement (11) de l'élément tandis que les broches de joint (5) du crochet s'encastrent dans des trous (7) prévus à cet effet, le joint comprenant une pièce d'angle (8), séparée des éléments (1, 2) et ayant deux surfaces de raccordement (9, 10) formant un angle entre elles, les surfaces de raccordement (11) des éléments (1, 2) étant agencées contre ces surfaces de la pièce d'angle, dans lequel au moins une face d'extrémité (12) de la pièce d'angle (8) est munie d'une gorge (13), dans laquelle une partie d'âme (6) joignant les broches (5) du crochet de liaison (3) est agencée pour s'encastrer afin de verrouiller ensemble les éléments (1. 2) et la pièce d'angle (8), la largeur de la portion d'âme (6) du crochet de liaison (3) ainsi que la largeur de la gorge d'extrémité (13) de la pièce d'angle (8) correspondant à la largeur de la gorge (4) des éléments en pierre (1, 2), caractérisé en ce que la gorge d'extrémité de la pièce d'angle (8) a la forme d'un arc et en ce qu'au moins la partie d'âme (6) du crochet de liaison (3) est une pièce unique découpée dans une feuille de métal.

2. Joint d'angle tel que revendiqué à la revendication 1, caractérisé en ce que les broches de joint (5) du crochet de liaison (3) sont réalisées séparément de la partie d'âme (6) et sont raccordées à celle-ci

3. Joint d'angle tel que revendiqué à la revendication 1, caractérisé en ce que les broches de joint (5) du crochet de liaison (3) sont réalisées lors de la même opération que la partie d'âme (6), lorsque la totalité du crochet de liaison (3) est découpée dans une feuille de métal.
